# FASCICULE DE BREVET EUROPEEN

(11) **EP 1 663 869 B1**
(45) Date de publication et mention de la délivrance du brevet: **01.08.2012**
(21) Numéro de dépôt: 04766319.0
(22) Date de dépôt: 27.07.2004
(51) Int. Cl.: C01F 11/02, C01F 11/00

(54) **SUSPENSION AQUEUSE CALCO-MAGNESIENNE ET SON PROCEDE DE PREPARATION**
WÄSSRIGE CALICUM-MAGNESIUM-SUSPENSION UND HERSTELLUNGSVERFAHREN DAFÜR
CALCO-MAGNESIAN AQUEOUS SUSPENSION AND METHOD FOR THE PRODUCTION THEREOF

(30) Priorité: 28.07.2003 BE 200300426
(43) Date de publication de la demande: 07.06.2006
(73) Titulaire: S.A. LHOIST RECHERCHE ET DEVELOPPEMENT, 1342 Ottignies-Louvain-La-Neuve (BE)
(72) Inventeur: DIAZ CHAVEZ, Luis Alfredo, B-1320 Beauvechain (BE); SALTER, Timothy L., US / HEBRON, IN 46341 (US); HABIB, Ziad, B-1630 LINKEBEEK (BE); LANGELIN, Henri-René, F-62132 Caffiers (FR)
(74) Mandataire: Claeys, Pierre
(86) Numéro de dépôt international: PCT/EP2004/051609
(87) Numéro de publication internationale: WO 2005/014483

(56) Documents cités:
- EP-A- 0 623 555
- EP-A- 1 077 199
- DE-A- 4 302 539
- US-A- 5 277 837
- US-A- 5 422 092

## Description

La présente invention est relative à une suspension aqueuse calco-magnésienne, et à son procédé de préparation.

Un cas particulier de suspension aqueuse calco-magnésienne est le lait de chaux, qui est une suspension fluide de chaux éteinte, également appelée chaux hydratée (hydroxyde de calcium - Ca(OH)₂) laquelle peut évidemment comprendre des impuretés, notamment de la silice, de l'alumine ou de l'oxyde de magnésium à hauteur de quelques pour-cents. Une telle suspension est obtenue soit par extinction d'une chaux vive (oxyde de calcium - CaO) avec un large excès d'eau, soit par mélange d'une chaux éteinte et d'une masse d'eau plusieurs fois supérieure. La suspension résultante est caractérisée par la concentration en matière solide et la distribution des tailles des particules en suspension. Ces deux caractéristiques déterminent les propriétés du lait, principalement sa viscosité et sa réactivité.

La viscosité est une propriété déterminante quant à la mise en oeuvre et la manipulation (pompage, transport en conduite,...) de la suspension. A cette fin, l'expérience a permis d'établir qu'il est souhaitable de ne pas dépasser une viscosité dynamique de 1,2 Pa.s. D'une manière générale, la viscosité augmente lorsque la concentration en matière solide augmente et lorsque la taille des particules en suspension diminue.

La réactivité d'un lait de chaux est une mesure de la vitesse de dissolution des particules lors de la dilution du lait dans un volume important d'eau déminéralisée. Cette mesure, basée sur l'enregistrement de l'évolution de la conductivité de la phase liquide résultante, a été mise au point pour le contrôle de la réactivité des laits de chaux destinés à l'adoucissement des eaux potables (v. Van Eckeren et cons. Improved milk-of-lime for softening of drinking water : the answer to the carry-over problem, in Aqua, 1994, 43(1), p. 1-10).

La réactivité du lait de chaux est également importante pour toute opération de neutralisation ou floculation.

Il est connu que la vitesse de solubilisation des particules de chaux est d'autant plus rapide que la taille des particules est faible. De plus, une grande finesse des particules réduit généralement la sédimentation de la phase solide de la suspension.

D'une manière générale, il est économiquement avantageux de pouvoir augmenter la concentration du lait de chaux, afin de réduire les coûts de transport et la taille des équipements (réservoirs de stockage, pompes...).

On comprend la difficulté de concilier faible viscosité, concentration élevée et réduction de la taille des particules en suspension.

Il est connu d'améliorer la concentration du lait de chaux par ajout d'un agent dispersant, en présence d'une faible quantité d'un hydroxyde de métal alcalin [US 5 616 283, US 4 849 128, US 4 610 801]. Ce mode de préparation permet d'atteindre des concentrations supérieures à 40% de matière sèche, avec une viscosité dynamique inférieure à 1,2 Pa.s. Toutefois, l'utilisation de dispersant est coûteuse et incompatible avec certaines applications.

Il est également connu d'augmenter la concentration en phase solide dans la suspension, tout en limitant l'augmentation de viscosité, par incorporation d'une chaux éteinte présentant une taille des particules plus grossière ou par extinction de la chaux vive dans des conditions favorables à la croissance des grains, par exemple par limitation de l'augmentation de température lors de l'extinction, par ajout d'additifs tels que des sulfates, etc. [BE-1006655, US-4.464.353]. De tels laits de chaux sont moins réactifs, ce qui en limite les utilisations. Par ailleurs, ces suspensions sédimentent plus rapidement, si aucun dispersant n'est ajouté.

La présente invention a pour but de mettre au point une suspension aqueuse à base de chaux ou d'un composé de chaux à viscosité contrôlée, de préférence faible, afin de pouvoir en augmenter la concentration en matière solide et/ou réduire la taille des particules en suspension.

On résout ce problème, suivant l'invention, par une suspension aqueuse calco-magnésienne présentant des particules de matière solide ayant, avant mise en suspension, une surface spécifique, calculée selon la méthode BET, qui est inférieure ou égale à 10 m²/g, les particules de matière solide de la suspension aqueuse calco-magnésienne répondant à la formule suivante :

xCa(OH)₂.(1-x)MgO.yH₂O

où
0 < x ≤ 1, et
y ≤ (1-x),
x et y étant des fractions molaires,

cette suspension possédant une viscosité dynamique inférieure ou égale à 1,2 Pa.s et présentant une teneur en matière solide supérieure à 25 % en poids, lesdites particules de matière solide de cette suspension aqueuse présentant
a) une surface spécifique calculée selon la méthode BET, qui est inférieure ou égale à 8 m²/g, de préférence inférieure ou égale à 5 m²/g
   ou
b) une dimension granulométrique d₉₈ inférieure à 20 microns, de préférence égale ou inférieure à 5 microns.

De préférence x a une valeur de 0,8 à 1, tout à fait avantageusement de 1.

Une telle suspension peut être préparée par mise en suspension d'une matière solide calco-magnésienne présentant des particules ayant une faible surface spécifique, inférieure ou égale à 10 m²/g, selon la mesure d'adsorption à l'azote (méthode BET). Il est apparu d'une manière surprenante qu'une suspension aqueuse d'un tel type de matière solide calco-magnésienne pouvait atteindre une viscosité très faible, et donc en corollaire permettait d'augmenter fortement la concentration en matière solide de la suspension, ce qui n'était guère possible auparavant, ou encore de réduire la taille des particules en suspension, et donc d'obtenir un lait concentré et réactif. Il a en fait été possible par l'invention de mettre en évidence une relation directe entre la surface spécifique des particules en suspension et la viscosité de ces suspensions, à conditions identiques de concentration et de taille des particules.

On peut noter qu'une chaux hydratée présentant une telle surface spécifique n'est connue que depuis peu. Elle peut être notamment obtenue par extinction de chaux vive en présence de CaCl₂ (v. Holmberg, J., Slaking of lime, document consulté sur le site internet <http://server1.chemeng.lth.se/exjobb/009.pdf> en juin 2003) ou d'un dispersant (v. JP 11-139850).

On peut aussi prévoir une extinction de CaO en présence de MgCl₂, suivie d'une déshydratation et d'un séchage (US-A-5.422.092).

Dans la demande EP-A-1077199 on décrit une poudre d'hydroxyde de calcium traitée en surface par un tensioactif anionique qui présente une surface spécifique BET de 7 à 20 m²/g.

Suivant une forme de réalisation de l'invention, les particules de matière solide ont une surface spécifique selon la méthode BET inférieure ou égale à 8 m²/g, de préférence inférieure ou égale à 5 m²/g.

La suspension présente avantageusement une viscosité dynamique inférieure ou égale à 1,2 Pa.s, de préférence inférieure ou égale à 1,0 Pa.s.

Dans ces conditions il est possible d'obtenir une suspension suivant l'invention présentant des teneurs en matière solide supérieures à 25%, et avantageusement supérieures à 40 % et/ou des dimensions granulométriques d₉₈ inférieures à 20 microns, de préférence égales ou inférieures à 5 microns.

Les particules de la suspension suivant l'invention peuvent donc être formées de chaux hydratée uniquement, mais aussi d'un composé mixte formé de chaux hydratée et de magnésie laquelle peut être totalement ou partiellement hydratée, ou même non hydratée. Cette matière calco-magnésienne peut évidemment contenir en outre des impuretés, comme mentionné précédemment à propos de la chaux hydratée.

D'autres formes de réalisation du produit et du procédé suivant l'invention sont indiquées dans les revendications annexées.

L'invention va à présent être décrite de manière plus détaillée à l'aide d'exemples non limitatifs.

### Exemple 1

Trois laits de chaux concentrés ont été préparés par mélange à 20°C de 10 l d'eau et de 5 kg de chaux hydratée. L'une de ces chaux présente une surface spécifique de 20 m²/g et les deux autres, conformes à la présente invention, une surface spécifique respectivement de 10 et de 5 m²/g. La surface spécifique est mesurée par adsorption d'azote, selon la méthode BET. Le mélange est maintenu sous agitation mécanique durant 30 minutes.

Afin d'obtenir des laits de chaux de distribution granulométrique comparable, ceux-ci sont tamisés à 200 µm ; le passant subit éventuellement un broyage humide, dans un broyeur à billes de verre de diamètre compris entre 0,5 et 0,8 mm. La distribution des tailles de particules est mesurée au moyen d'un granulomètre laser ; ces distributions sont caractérisées en termes de d₅₀, d₉₀ et d₉₈, valeurs interpolées de la courbe de distribution des tailles des particules. Les dimensions d₅₀, d₉₀ et d₉₈ correspondent aux dimensions pour lesquelles respectivement 50%, 90% et 98% des particules sont inférieures aux dites dimensions.

Le pourcentage de matière solide dans les suspensions est ajusté par dilution, de façon à obtenir au départ de chaque chaux hydratée 3 laits, contenant respectivement 20%, 25% et 30% de matière solide. La viscosité de ces laits de chaux est mesurée par un viscosimètre «Brookfield DV III Rheometer», avec aiguille n°3 à 100 tours/min.

Les valeurs de surface spécifique des 3 chaux hydratées utilisées pour la préparation des laits de chaux ainsi que les caractéristiques granulométriques et viscosités des suspensions correspondantes sont repris dans le tableau 1

**Tableau 1. Surface spécifique des 3 chaux hydratées utilisées pour la préparation des laits de chaux ainsi que les caractéristiques granulométriques et viscosités des suspensions correspondantes. Cas de suspensions de particules ayant un d₉₈ de 17 à 18 µm.**

| Lait | Surface spécifique | Caractérisation granulométrique[µm] | | | Viscosité à différent % de solides[Pa.s] | | |
|---|---|---|---|---|---|---|---|
| | [m²/g] | d₅₀ | d₉₀ | d₉₈ | 20% solide | 25% solide | 30% solide |
| 1 | 20 | 3 | 10 | 18 | 1,00 | > 1,5 | >2 |
| 2 | 10 | 3 | 9 | 17 | 0,16 | 0,35 | 0,60 |
| 3 | 5 | 3 | 10 | 18 | 0,08 | 0,18 | 0,30 |

De façon prévisible, on constate qu'à granulométrie comparable et à surface spécifique identique, la viscosité augmente en fonction de la concentration. Par contre, quelle que soit la teneur en matière solide, la viscosité diminue très fortement en fonction de la surface spécifique de la chaux hydratée. En particulier, lorsque la concentration en solide de la suspension est de 20%, la viscosité diminue de 1 à 0,08 Pa.s lorsque la surface spécifique de la chaux hydratée de base diminue de 20 à 5 m²/g, à granulométrie comparable.

Par ailleurs, lorsque la surface spécifique est de 20 m²/g, la concentration en matière solide doit être inférieure à 25% pour conserver une viscosité acceptable (1,2 Pa.s). Par contre, on obtient aisément des laits de chaux à 30% de matière solide et de faible viscosité (0,6 Pa.s), lorsque la surface spécifique de la chaux hydratée est égale ou inférieure à 10 m²/g, selon la présente invention.

### Exemple 2

Trois laits de chaux concentrés ont été préparés selon le mode opératoire présenté à l'exemple 1, l'un au départ d'une chaux hydratée, dont la surface spécifique est de 15 m²/g, et deux autres conformes à la présente invention, au départ de 2 chaux hydratées, dont le surface spécifique est respectivement de 10 et 5 m²/g. Comme dans l'exemple 1, les particules en suspension sont de granulométries comparables mais plus fines. Dans l'exemple 2, la concentration en matière sèche a été également ajustée par dilution mais de façon à obtenir 15%, 20% et 25% de matière sèche. Les résultats sont présentés au tableau 2.

**Tableau 2. Surface spécifique des 3 chaux hydratées utilisées pour la préparation des laits de chaux ainsi que les caractéristiques granulométriques et viscosités des suspensions correspondantes. Cas de suspensions de particules ayant un d₉₈ de 5 µm.**

| Lait | Surface spécifique | Caractérisation granulométrique[µm] | | | Viscosité à différent % de solides [Pa.s] | | |
|---|---|---|---|---|---|---|---|
| | [m²/g] | d₅₀ | d₉₀ | d₉₈ | 15% solide | 20% solide | 25% solide |
| 1 | 15 | 1,5 | 3 | 5 | 1,00 | >2 | - |
| 2 | 10 | 1,5 | 3,1 | 5 | 0,18 | 0,30 | 0,50 |
| 3 | 5 | 1,6 | 3 | 5 | 0,05 | 0,12 | 0,25 |

Les résultats du tableau 2 concordent avec ceux de l'exemple 1 : à même teneur en solide et granulométrie comparable (d₉₈=5µm), la viscosité du lait de chaux diminue lorsque la surface spécifique de la chaux hydratée utilisée diminue. Par ailleurs et comme attendu, il ressort de la comparaison des tableaux 1 et 2 pour les chaux hydratées à 5 et 10 m²/g et avec un contenu en matière solide de 20% et 25%, que la viscosité des laits de chaux augmente bien avec la diminution de la taille des particules.

Dans cet exemple 2, on constate que l'obtention d'un lait de viscosité inférieure à 1,2 Pa.s avec un contenu en matière solide égal ou supérieur à 20% n'est possible au départ d'une chaux hydratée de grande finesse (d₉₈=5µm) que si celle-ci possède une surface spécifique inférieure ou égale à 10 m²/g, selon la présente invention.

### Exemple 3

Au départ des trois laits de chaux concentrés de l'exemple 1, on a procédé à une dilution de façon à ajuster la viscosité à une valeur comprise entre 1 et 1,2 Pa.s. On a ensuite déterminé la concentration en matière sèche correspondante. Les résultats sont présentés au tableau 3.

**Tableau 3. Comparaison des teneurs en solide pour des laits de chaux ayant une viscosité comprise entre 1 et 1,2 Pa.s. Cas de suspension présentant un d₉₈ de 17 à 18 microns.**

| Lait | Surface spécifique | Caractérisation granulométrique[µm] | | | Viscosité | Teneur en solide |
|---|---|---|---|---|---|---|
| | [m²/g] | d₅₀ | d₉₀ | d₉₈ | [Pa.s] | |
| 1 | 20 | 3 | 10 | 18 | 1,00 | 20% |
| 2 | 10 | 3 | 9 | 17 | 1,00 | 32% |
| 3 | 5 | 3 | 10 | 18 | 1,10 | 40% |

A distribution de tailles des particules et viscosité comparables, le contenu en matière sèche est d'autant plus élevé que la surface spécifique de la chaux hydratée est faible. Ainsi, il est possible, sans dispersant, de doubler la teneur en matière solide de 20% à 40%, si on réduit la surface spécifique de la chaux hydratée de 20 à 5 m²/g, selon la présente invention.

### Exemple 4

De manière analogue à l'exemple 3, les trois laits de chaux concentrés de l'exemple 2 ont été dilués de manière à ajuster la viscosité à une valeur comprise entre 1 et 1,2 Pa.s. On a ensuite déterminé la concentration en matière sèche correspondante. Les résultats sont présentés au tableau 4.

**Tableau 4. Comparaison des teneurs en solide pour des laits de chaux ayant une viscosité comprise entre 1 et 1,2 Pa.s.. Cas de suspensions de particules présentant un d₉₈ de 5 microns.**

| Lait | Surface spécifique | Caractérisation granulométrique [µm] | | | Viscosité | Teneur en solide |
|---|---|---|---|---|---|---|
| | [m²/g] | d₅₀ | d₉₀ | d₉₈ | [Pa.s] | |
| 1 | 15 | 1,5 | 3 | 5 | 1,00 | 15% |
| 2 | 10 | 1,5 | 3,1 | 5 | 1,00 | 28% |
| 3 | 5 | 1,6 | 3 | 5. | 1,20 | 35% |

Les conclusions de l'exemple 3 s'appliquent également pour des laits de chaux de plus grande finesse granulométrique (d98=5µm). Le contenu en matière solide, de 15% pour une chaux éteinte de 15 m²/g, atteint 35% pour une chaux hydratée de 5 m²/g, selon la présente invention.

### Exemple 5

L'objet de cet exemple est de valider la présente invention par rapport à un lait de chaux concentré, obtenu industriellement selon un procédé connu de fabrication (ajout d'agent dispersant). Le lait de chaux industriel est préparé au départ d'une chaux hydratée de 20 m²/g de surface spécifique et présente une viscosité de 1,2 Pa.s. Cette suspension est comparée à un lait de chaux préparé selon la présente invention avec une chaux hydratée de surface spécifique égale à 5 m²/g. Les caractéristiques des deux laits de chaux sont présentées au tableau 5.

**Tableau 5. Comparaison des caractéristiques de deux laits à haute teneur en matière solide**

| Lait | Surface spécifique | Caractérisation granulométrique[µm] | | | Viscosité | Teneur en solide |
|---|---|---|---|---|---|---|
| | [m²/g] | d₅₀ | d₉₀ | d₉₈ | [Pa.s] | |
| industriel (+dispersant) | 20 | 12 | 80 | 150 | 1,20 | 45% |
| selon l'invention | 5 | 4 | 50 | 130 | 1,20 | 45% |

Il est donc possible d'obtenir sans dispersant, selon la présente invention, un lait de chaux de même viscosité (1,2 Pa.s) et de même teneur en matière solide (45%) qu'un lait industriel à très haute concentration obtenue par ajout de dispersant. On remarque de surcroît que le lait de chaux selon l'invention présente une plus grande finesse, à même valeur de viscosité. En outre, il ne contient aucun dispersant, ce qui en réduit le coût de production et en rend compatible l'utilisation dans un nombre plus grand d'application.

### Exemple 6

Trois laits de chaux ont été préparés selon le mode opératoire de l'exemple 1, au départ d'une chaux hydratée ayant une surface spécifique de 5 m²/g mais une distribution de tailles des particules différentes et avec un contenu en matière solide de 34% à 45%. La viscosité de ces laits de chaux a été mesurée, juste après leur préparation (viscosité initiale) et après 7 jours, pendant lesquels ils sont maintenus sous agitation. Les caractéristiques des trois laits de chaux sont présentées au tableau 6.

**Tableau 6. Stabilité au cours du temps des laits à base de chaux hydratée à faible surface spécifique.**

| Lait | Surface spécifique | Caractérisation granulométrique[µm] | | | Viscosité initiale | Viscosité après 7 jours | Teneur en solide |
|---|---|---|---|---|---|---|---|
| | [m²/g] | d₅₀ | d₉₀ | d₉₈ | [Pa.s] | [Pa.s] | |
| 1 | 5 | 4 | 50 | 130 | 1,15 | 1,15 | 45% |
| 2 | 5 | 3 | 10 | 18 | 1,00 | 1,10 | 39% |
| 3 | 5 | 1,6 | 3 | 5 | 1,20 | 1,15 | 34% |

On n'observe aucune évolution significative de la viscosité dans l'intervalle de temps considéré. Les laits de chaux, préparés selon la présente invention, peuvent donc faire l'objet d'un stockage temporaire avant utilisation, sans préjudice de leur facilité de mise en oeuvre.

### Exemple 7

Trois laits de chaux ont été préparés selon le mode opératoire de l'exemple 1, au départ d'une chaux hydratée d'une surface spécifique de 5, 10 et 15m²/g de manière à obtenir des laits de chaux très fins, donc réputés très réactifs.

La réactivité a été déterminé par mesure de la vitesse de dissolution d'une quantité connue de grains de chaux en suspension, dans des conditions très diluées. Plus précisément, il s'agit de mesurer le temps « t₉₀ »nécessaire pour atteindre une valeur de conductivité, correspondant à 90 % de la conductivité maximale, correspondant à la valeur d'équilibre de dissolution.

Le test est conduit comme suit : 5 cm³ de lait de chaux, dilué à 2% de matière sèche, sont ajoutés instantanément à 700 cm³ d'eau déminéralisée, thermostatisée à 25 °C et maintenue sous agitation à 400 tours/min. L'évolution de la conductivité est mesurée toutes les 0,3 s, jusqu'à obtention d'une valeur stable de la conductivité. La valeur du t₉₀ est interpolée de l'enregistrement de la courbe de conductivité.

Les laits de chaux peu réactifs ont une valeur de t₉₀ de plusieurs dizaines de secondes ; par contre, un lait de chaux peut être considéré comme très réactif, lorsque son t₉₀ est inférieur à 3 s.

Les résultats des tests de réactivité, appliqués aux trois laits de chaux, décrits ci-dessus, figurent au tableau 7.

**Tableau 7. Résultats du test de réactivité en fonction de la surface spécifique de la chaux hydratée. Cas d'une chaux de grande finesse (d₉₈=5µm).**

| Lait | Surface spécifique | Caractérisation granulométrique[µm] | | | t₉₀ |
|---|---|---|---|---|---|
| | [m²/g] | d₅₀ | d₉₀ | d₉₈ | [s] |
| 1 | 15 | 1,5 | 3 | 5 | 2,1 |
| 2 | 10 | 1,5 | 3,1 | 5 | 2,2 |
| 3 | 5 | 1,6 | 3 | 5 | 2,3 |

On remarque que la valeur de la réactivité (t₉₀) est indépendante de la surface spécifique de la chaux hydratée mise en oeuvre pour la préparation du lait.

Il doit être entendu que la présente invention n'est en aucune façon limitée aux modes de réalisation décrits ci-dessus et que bien des modifications peuvent y être apportées, sans sortir du cadre des revendications annexées.

## Revendications

1. Suspension aqueuse calco-magnésienne présentant des particules de matière solide ayant, avant mise en suspension, une surface spécifique, calculée selon la méthode BET, qui est inférieure ou égale à 10 m²/g, les particules de matière solide répondant à la formule
xCa(OH)₂.(1-x)MgO.yH₂O
où
0 < x ≤ 1, et
y ≤ (1-x),
x et y étant des fractions molaires,
cette suspension possédant une viscosité dynamique inférieure ou égale à 1,2 Pa.s et présentant une teneur en matière solide supérieure à 25 % en poids,
**caractérisée en ce que** lesdites particules de matière solide de cette suspension aqueuse présentent
a) une surface spécifique calculée selon la méthode BET, qui est inférieure ou égale à 8 m²/g, de préférence inférieure ou égale à 5 m²/g
ou
b) une dimension granulométrique d₉₈ inférieure à 20 microns, de préférence égale ou inférieure à 5 microns.

2. Suspension suivant la revendication 1, **caractérisée en ce qu'**elle possède une viscosité dynamique inférieure ou égale à 1,0 Pa.s.

3. Suspension suivant l'une des revendications 1 et 2, **caractérisée en ce qu'**elle présente une teneur en matière solide supérieure à 40 %.

4. Procédé de préparation de suspension aqueuse calco-magnésienne suivant l'une quelconque des revendications 1 à 3, **caractérisé en ce qu'**il comprend une mise en suspension dans un milieu aqueux d'une matière solide calco-magnésienne présentant des particules ayant une surface spécifique, calculée selon la méthode BET, qui est inférieure ou égale à 10 m²/g, les particules de matière solide répondant à la formule
xCa(OH)₂.(1-x)MgO.yH₂O
où
0 < x ≤ 1, et
y ≤ (1-x),
x et y étant des fractions molaires,
de manière à obtenir une teneur en matière solide supérieure à 25 % en poids, les particules de la suspension aqueuse formées présentant
a) une surface spécifique calculée selon la méthode BET, qui est inférieure ou égale à 8 m²/g, de préférence inférieure ou égale à 5 m²/g
ou
b) une dimension granulométrique d₉₈ inférieure à 20 microns, de préférence égale ou inférieure à 5 microns.

## Claims

1. A calco-magnesian aqueous suspension having solid matter particles with, before being put into suspension , a specific surface area, calculated according to the BET method, which is less than or equal to 10 m²/g, the particles of solid matter complying with the formula
xCa(OH)₂.(1-x)MgO.yH₂O
wherein
0 < x ≤ 1, and
y ≤ (1-x),
x and y being molar fractions,
this suspension having a dynamic viscosity of less than or equal to 1.2 Pa.s and having a solid matter content of more than 25% by weight,
**characterized in that** said solid matter particles of this aqueous suspension have
a) a specific surface area calculated according to the BET method, which is less than or equal to 8 m²/g, preferably less than or equal to 5 m²/g
or
b) a grain size d₉₈ of less than 20 microns, preferably less than or equal to 5 microns.

2. The suspension according to claim 1, **characterized in that** it has a dynamic viscosity of less than or equal to 1.0 Pa.s

3. The suspension according to one of claims 1 and 2, **characterized in that** it has a solid matter content of more than 40% .

4. A method for preparing a calco-magnesian aqueous suspension according to any of claims 1 to 3, **characterized in that** it comprises a putting into suspension in an aqueous medium of a calco-magnesian solid matter having particles with a specific surface area, calculated according to the BET method, which is less than or equal to 10 m²/g, the solid matter particles complying with the formula
xCa(OH)₂.(1-x)MgO.yH₂O
wherein
0 < x ≤ 1, and
y ≤ (1-x),
x and y being molar fractions,
so as to obtain a solid matter content of more than 25% by weight, the formed particles of the aqueous suspension having
a) a specific surface area calculated according to the BET method, which is less than or equal to 8 m²/g, preferably less than or equal to 5 m²/g or
b) a grain size d₉₈ of less than 20 microns, preferably less than or equal to 5 microns.

## Patentansprüche

1. Wässrige Calcium-Magnesium-haltige Suspension, die feststoffliche Partikel aufweist, die, bevor sie in Suspension gebracht werden, eine spezifische Oberfläche haben, welche bei Berechnung nach dem BET-Verfahren höchstens 10 m²/g beträgt, wobei die feststofflichen Partikel der folgenden Formel entsprechen
xCa(OH)₂.(1-x)MgO._{y}H₂O
wobei
0 < x ≤ 1, und
y ≤ (1-x),
wobei x und y die molaren Anteile sind,
wobei diese Suspension eine dynamische Viskosität von höchstens 1,2 Pa.s besitzt und einen Feststoffgehalt von mehr als 25 Gewichts-% aufweist,
**dadurch gekennzeichnet, dass** die Feststoffpartikel dieser wässrigen Suspension Folgendes aufweisen
a) eine spezifische Oberfläche, berechnet nach dem BET-Verfahren, die höchstens 8 m²/g, vorzugsweise höchstens 5 m²/g, beträgt,
oder
b) eine Korngrößenabmessung d₉₈ von weniger als 20 Mikrometern, vorzugsweise von höchstens 5 Mikrometern.

2. Suspension nach Anspruch 1, **dadurch gekennzeichnet, dass** sie eine dynamische Viskosität von höchstens 1,0 Pa.s besitzt.

3. Suspension nach einem der Ansprüche 1 und 2, **dadurch gekennzeichnet, dass** sie einen Feststoffgehalt von mehr als 40 % aufweist.

4. Verfahren zur Herstellung einer wässrigen Calcium-Magnesiumhaltigen Suspension nach einem beliebigen der Ansprüche 1 bis 3, **dadurch gekennzeichnet, dass** im Rahmen desselben ein Calcium-Magnesium-haltiger Feststoff, der Partikel mit einer spezifischen Oberfläche aufweist, welche bei Berechnung nach dem BET-Verfahren höchstens 10 m²/g beträgt, in einem wässrigen Milieu in Suspension gebracht wird, wobei die Feststoffpartikel der folgenden Formel entsprechen
xCa(OH)₂.(1-x)MgO.yH₂O
wobei
0 < x ≤ 1, und
y ≤ (1-x),
wobei x und y die molaren Anteile sind,
sodass ein Feststoffgehalt erzielt wird, der größer als 25 Gewichts-% ist, wobei die Partikel der gebildeten wässrigen Suspension Folgendes aufweisen
a) eine spezifische Oberfläche, berechnet nach dem BET-Verfahren, die höchstens 8 m²/g, vorzugsweise höchstens 5 m²/g, beträgt,
oder
b) eine Korngrößenabmessung d₉₈ von weniger als 20 Mikrometern, vorzugsweise von höchstens 5 Mikrometern.
